# EUROPEAN PATENT APPLICATION

(11) **EP 0 990 900 A2**
(43) Date of publication of application: **05.04.2000**
(21) Application number: 99830610.4
(22) Date of filing: 29.09.1999
(51) Int. Cl.: G01N 33/50, G01N 33/487, G01N 33/48, G01N 33/49, G01N 1/14

(54) **A method and device for detecting biological elements on a patient, in particular for use in medical - dental surgeries.**

(30) Priority: 29.09.1998 IT BO980552
(71) Applicant: CASTELLINI S.p.A., I-40013 Castelmaggiore (Bologna) (IT)
(72) Inventor: Castellini, Franco, 40124 Bologna (IT)
(74) Representative: Lanzoni, Luciano

(57) **Abstract**

A device for detecting infectious elements, antibodies or other biological indicators of a patient, in a dental surgery, envisages a container (1) with a first channel (7) for the suction of a quantity of fluid (F), from the patient, which gives onto a second chamber (8) with a surface (6) equipped with or soaked in reagent means (3) and/or means which condition the infectious elements and are designed to make contact with the fluid (F) sucked up; the second chamber (8) can be connected inside a first chamber (4) for depositing the mixture (F, 3) thus obtained; the first chamber (4) for depositing the mixture (F, 3) has detector means (5) designed to allow a relative analysis and control of the mixture (F, 3); the present invention also relates to a method of detection which envisages the suction of a fluid (F) from the patient through relative suction means (2), mixing of the fluid (F) with reagent means (3) and/or means which condition the biological elements and depositing of the mixture (F, 3) thus obtained in a special first chamber (4), there being a second stage for analysis and control of the result of the reaction which took place in the mixture (F, 3) using relative detector means (5).

## Description

The present invention relates to a method and device for detecting elements, such as infectious elements, or antibodies or other biological indicators, for the medical diagnosis of a patient, in particular for use in medical - dental surgeries and on/with dental units.

With reference to dental surgeries, which the present invention targets in particular, the latest dental units are of extremely high quality in terms of operation, equipment control and, above all, the hygiene of the internal and external functional structures. This high quality is the result of the ever increasing search for solutions that improve the unit which, according to the Applicant, should be the means which guarantee increasing support for the patient and the dental surgeon who uses it, even in diagnostics relating to infections which may be transmitted during dental treatment or even before treatment of a given complexity in the oral cavity.

It is in this context that the manufacturers of dental equipment in general are increasingly seeking solutions which allow increasingly safe dental surgeon - patient treatment. The recent devices for disinfecting/sterilising dental handpieces, hydraulic - pneumatic tubes (even between one patient and the next), the use of "disposable" instruments or accessories, etc. should be remembered.

However, attention remains focused on some illnesses for which medical opinion is now consolidated on their transmissibility through haematic contact, such as, an example to represent all such illnesses, hepatitis C (HCV).

Therefore, in order to check for the presence of biological elements on patients treated (to guarantee the safety of the treatment for both the patient and the dental surgeon), the Applicant has designed a method and device which rapidly and safely detects such elements, referred to as biological in the general sense, directly during dental treatment, without obliging the patient to submit to specific blood tests, but making use directly of the particles of blood present in the oral cavity during normal dental treatment, such as the removal of tartar or normal treatment within the oral cavity.

The technical features of the present invention, in accordance with the above aims, are apparent in the claims herein, and the advantages are more clearly described in the detailed description below, with reference to the accompanying drawings, which illustrate an embodiment of the invention, without limiting the scope of its application, and in which:
Figure 1 is a schematic exploded front view with some parts cut away to better illustrate others, of a unit for the suction and discharge of pollutant elements which is part of a dental unit equipped with the device for detecting biological elements, in accordance with the present invention;
Figure 2 is a schematic front view, with some parts in cross-section to better illustrate others, of the device in Figure 1, in a first operating stage;
Figure 3 is a schematic front view, with some parts cut away to better illustrate others, of the device in the previous figures, in a second operating stage;
Figure 4 is a schematic front view, with some parts cut away to better illustrate others, of part of the device in the previous figures, in a third operating stage, in accordance with the present invention;
Figure 5 is a schematic side view, with some parts in cross-section to better illustrate others, of another embodiment of the device in accordance with the present invention;
Figure 6 is a scaled up view of a detail A from Figure 1, which is part of the device disclosed;
Figures 7, 8 and 9 are side views, partially in cross-section, of another embodiment of the device illustrated in Figures 1 to 4, respectively in the pick-up, mixing and diagnostic operating positions;
Figures 10 and 11 are side views, with some parts in cross-section and others cut away, of respective details of the device illustrated in Figures 7, 8 and 9, specifically, part of a cannula, in two different operating configurations;

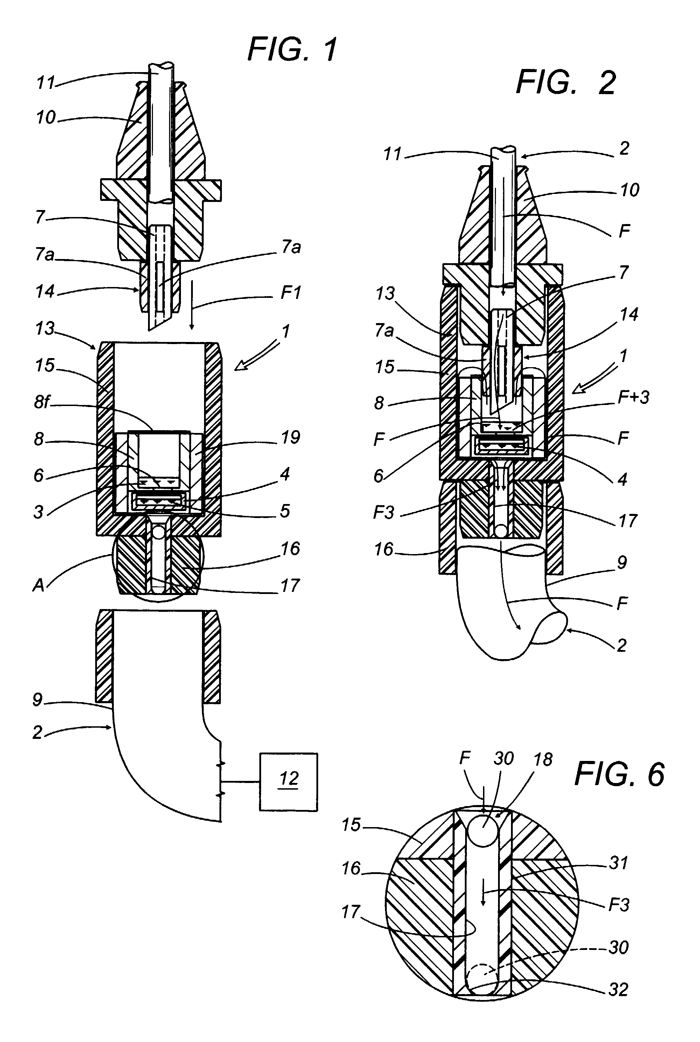

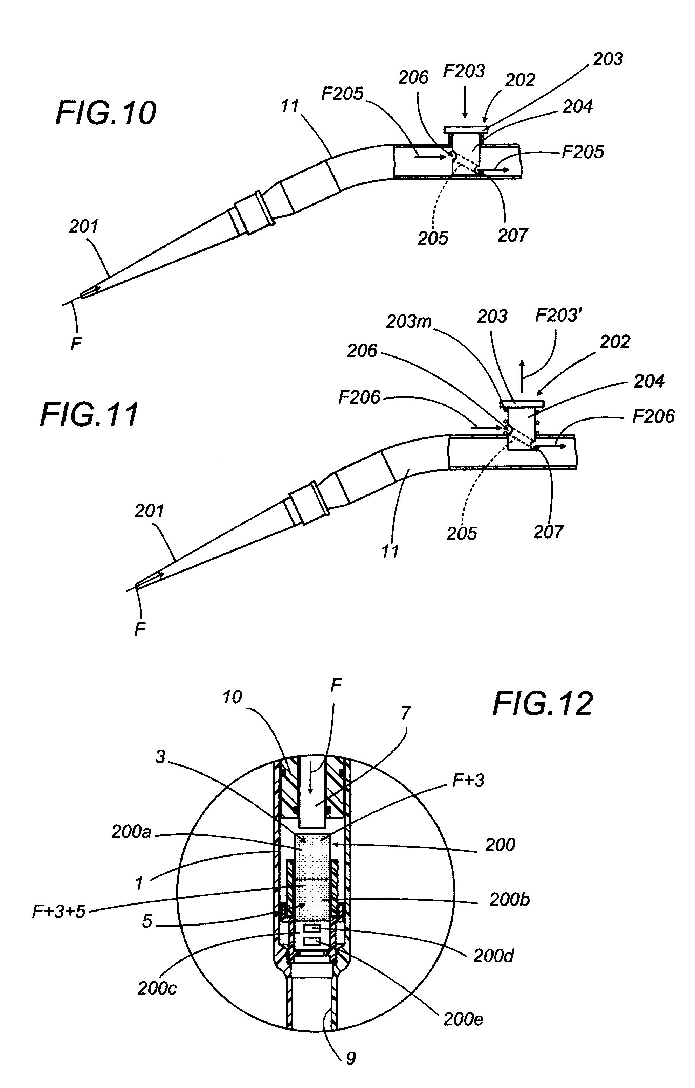

Figure 12 is a schematic front view of another embodiment of a part of the device disclosed. With reference to the accompanying drawings, and in particular Figures 1, 2 and 5, the method and device disclosed can be used to detect infectious elements, antibodies or other biological indicators, on a patient during treatment in a dental surgery. In this specific case, the biological elements in question (for example, the antibodies of the pathogenic element responsible for hepatitis C or HCV) can be detected by taking particles of blood from the oral cavity of the patient (not illustrated), or parts of the dental unit where blood particles are deposited (for example, the spit bowl) when the patient undergoes normal dental treatment. The method for detection, in accordance with the present invention, envisages a set of operations basically divided into two stages. The first stage is effected within a single element 1 and envisages:
   a) suction of fluid, indicated with the arrows F in the accompanying drawings, containing some traces of blood from the patient, using relative suction means 2;
   b) mixing of the fluid F collected with reagent means 3 and/or means which condition the biological elements (for example, a special enzyme which acts on the antibodies of the virus to be detected); and
   c) deposition of the mixture F + 3 thus obtained. The second stage, which it is not necessarily possible to effect close to the patient, envisages the analysis and control of the result of the reaction which takes place in the mixture F + 3 using relative detector means 5.

The suction operation must preferably be carried out in accordance with a preset time (or, alternatively, according to a quantity of fluid which can be preset through a control of the volume of air or fluid sucked up) to avoid the risk of altering the results of the reaction in the mixture of the fluid F and reagent means 3 and/or conditioning means.

The suction operation may be followed by a control of the quality and/or quantity of fluid picked up, before going on to the stage in which it is mixed with the reagent means 3.

Obviously, the generic reagent means 3 and/or conditioning means are selected beforehand, according to the infectious elements, antibodies or biological indicators to be detected on the patient, and may be in the form of powders or, preferably, liquids. The fluid F and reagent means 3 are mixed by contact between the fluid F picked up, which makes contact with or is deposited on a surface 6 equipped with or soaked in reagent means 3 and/or conditioning means, with which it mixes during its passage or as it is deposited (as described below).

The device which can be used to implement the method described is preferably (as illustrated in Figures 1 to 6) in the form of a single container 1 with a first channel 7 for the suction of a quantity of fluid F from the patient.

This first channel 7 may, in general, give onto the inside of a container element 8, 4; 200, the first portion of which is equipped with or soaked in reagent means 3 and/or conditioning means for the biological elements, and designed to make contact with or mix with the fluid F, whilst a second portion of the container element 8, 4; 200 contains detector means 5 designed to allow a relative diagnosis of the mixture F + 3 defined in the first portion.

Figures 1 to 6 illustrate a first embodiment of the device in which the first channel 7 gives onto the inside of a second chamber 8 (defining the above-mentioned first portion) in which the reagent and/or conditioning means 3 are deposited and designed to make contact with or be mixed with the fluid F sucked up. The second chamber 8 can be connected to the second portion, defined by a first chamber 4 for depositing the mixture F + 3 thus obtained (as described below).

The first chamber 4 for depositing the mixture F + 3 may, preferably, be removable from the container 1 or, alternatively, may be made in such a way that it is clearly visible to the dental surgeon even without removing it from the container 1, allowing an analysis and control of the mixture F + 3, using the detector means 5, and so also allowing the relative diagnosis by personnel not directly involved in the treatment.

Looking in more detail at the first preferred embodiment of the invention described above (illustrated in Figures 1 to 4), the device may be envisaged as an integral part of a dental unit (of the known type and, therefore, not illustrated), which may be directly equipped with the container 1 for the above-mentioned suction, mixing and mixture depositing operations.

As is known, for this purpose, the dental unit is equipped with, amongst other things, a tube 9 for the suction - discharge of pollutant elements during treatment of the oral cavity. This tube 9 extends from an outer operating end, with an end section 10 that houses a suction cannula 11 (partially illustrated), to an end which gives onto the inside of the dental unit, in a relative discharge tank 12 (illustrated in the form of a block). This tube 9 may be the conventional section of the device used for saliva suction, present in all dental units. In this specific case, the container 1 for picking up the fluid F is applied, in such a way that it can be removed, on the suction tube 9 and can be inserted between the cannula 11 and the discharge tank 12 so as to take advantage of the suction action of this circuit.

More specifically, the container 1 consists of a tubular cylindrical connecting body 13, with open ends, which can be connected to the suction end section on one side, and to the suction tube 9 on the other. The body 13 can house the first suction channel 7, which passes through it and can be connected to the end section 10 with the cannula 11, and is positioned coaxially to the suction tube 9 to allow the passage of the fluid F sucked up.

The first channel 7 is fitted with means 14 for stably connecting the first channel to the second chamber 8, in such a way as to allow part of the fluid F to flow into the second chamber 8.

More specifically, the first channel consists of a nozzle 7 which can be connected, using pressure, to the lower part of the end section 10 and has one tapered, or pointed end, allowing its first penetration of a sealing sheet 8f on the upper opening of the second chamber 8, thus allowing a direct connection between the end section 10 and the chamber 8.

To keep the nozzle 7 stably in contact with the second chamber 8 and allow an outlet from the second chamber for the air and fluid F sucked up, the nozzle is fitted with a plurality of radial tabs 7a (arranged in a "cross" shape on the nozzle 7 in the case in question), attached to the outer surface of the lower part of the nozzle, which define the connecting means 14, designed to partially penetrate the second chamber 8 simultaneously with the tapered end of the nozzle 7 and allow stabilisation of the connection between the nozzle 7 and the second chamber 8.

Returning to the outer body 13, it has a first cup-shaped portion 15 housing the second chamber 8, which can preferably be separated from the body, and a lower tubular element 16 for connection to the suction tube 9. The tubular element 16 has a second channel 17 for the passage of part of the fluid F and air sucked up which is not used in the mixing operation inside the second chamber 8.

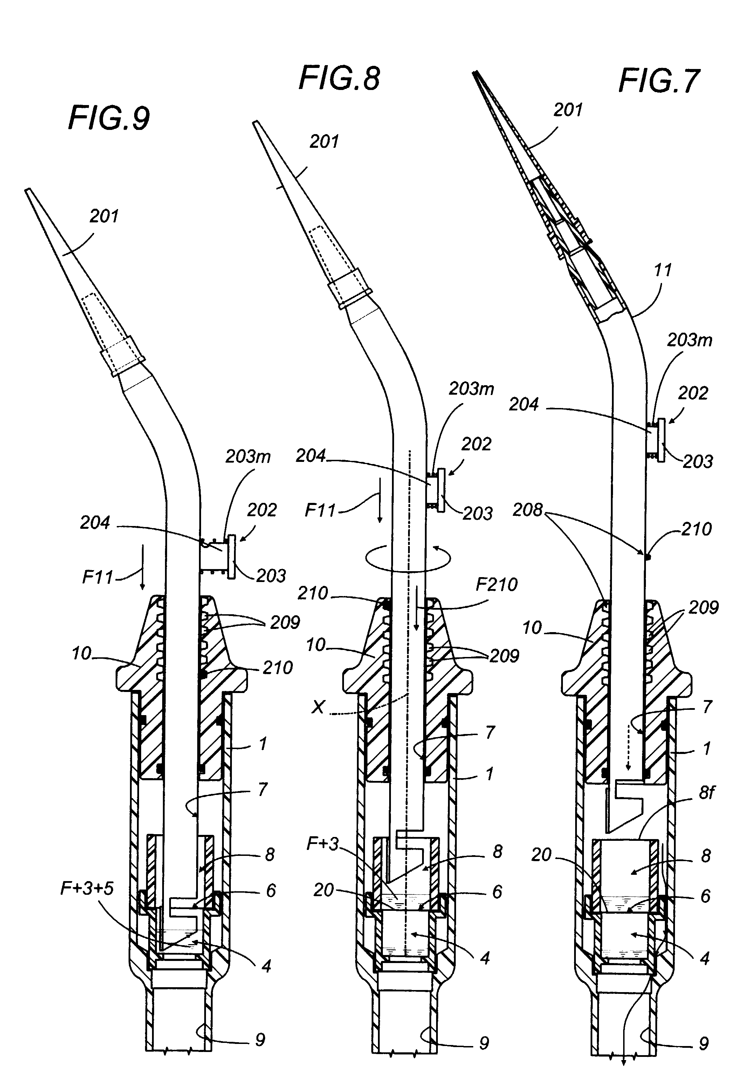

The body 13 may also have valve means 18, located and acting on the second suction channel 17 (see also Figure 6), which allow the second channel to be closed when a given quantity of fluid has been sucked up and/or when a given time for suction of the fluid F has elapsed.

Figure 6 illustrates a possible embodiment of the valve means 18, which consist of a bearing 30 housed, with a given degree of play, in a narrow section 31 with partially open path, and which can be closed in the end part of the second channel 17. Suction of the fluid F by the cannula 11 forces the bearing 30 to descend along the narrow section 31 until it blocks the end section 32 of the channel 17, thus terminating the suction stage. Basically, the length of the narrow section 31 can be "calibrated" according to the quantity of fluid F to be sucked up: for example, if only a small quantity of fluid F is to be sucked up, the narrow section 31 may be short, requiring less time for the bearing 30 to descend and block the end section 32.

As already indicated, the second chamber 8 is inserted in the body 13. Said second chamber consists of a second cylindrical body 19 with external dimensions slightly smaller than the internal diameter of the body 13, to allow the passage of the fluid F and air not involved in the mixing operation in the second chamber 8, letting it flow towards the second channel 17, and simultaneously allowing removal of the second body 19 from the outer body 13 upon completion of the suction stage.

The upper wall of the second body 19 is sealed by the sheet 8f, and the lower wall 20 defines a separator surface for the first chamber 4 for depositing the mixture F + 3, located in a relative seat 21 in the second cylindrical body 19. The separator surface 20 can be perforated by the nozzle 7, in a stage which follows definition of the mixture F + 3 in the second chamber 8, so as to allow the mixture to be deposited in the first chamber 4 and the relative analysis and control using the detector means 5.

As illustrated in Figures 1 to 4, the operations necessary in order to implement the above-mentioned method with the device described envisage the engagement of the outer body 13, housing the second body 19, between the tube 9 and the cannula 11 to which the nozzle 7 is connected (see Figure 1). The cannula 11 inserted in the end section 10, together with the nozzle 7, is attached to the body 13 (see arrow F1 in Figure 1) in such a way that it allows the nozzle 7 to penetrate the second chamber 8. At this point the suction can be activated, so as to pick up the fluid F and deposit it in the second chamber 8 (see the arrows F in Figure 2). The suction ends when the bearing 30 reaches the closing end 32 of the lower second channel 17 (see arrow F3 in Figures 2 and 6).

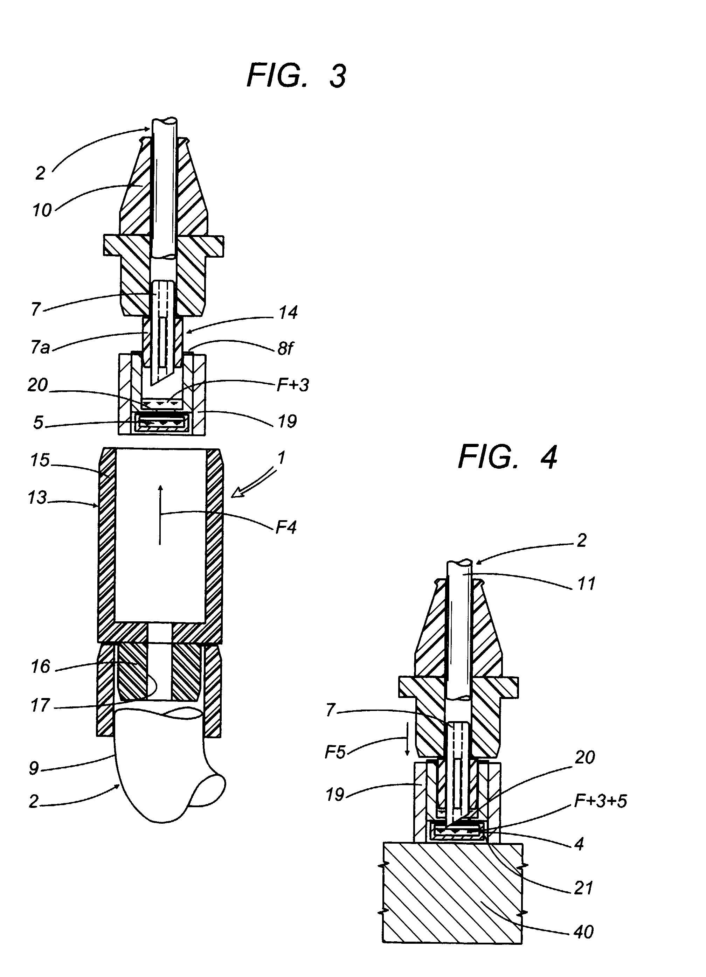

Upon completion of this operation, the assembly consisting of end section 10, cannula 11 and nozzle 7 to which the second body 19 is attached, may be removed from the body 13 (see Figure 3 and arrow F4) and placed on a rigid surface 40 (a table in the surgery or a special worksurface for the analysis). The operator presses the end section 10 which houses the cannula 11 again (see arrow F5 in Figure 4), allowing the nozzle 7 to penetrate the first chamber 4 and cause the mixture F + 3 present in the second chamber 8 to flow into the first chamber.

Having obtained this mixture F + 3 + 5, the operator can detach the first chamber 4 and analyse and control the result of the reaction generated inside the first chamber. Alternatively, the second body 19 and first chamber 4 may be made of a completely transparent material, so that the reaction can be observed without removing the first chamber 4, instead observing the lower zone of the container 1, that is to say, the portion of the container 1 previously connected to the suction tube 9.

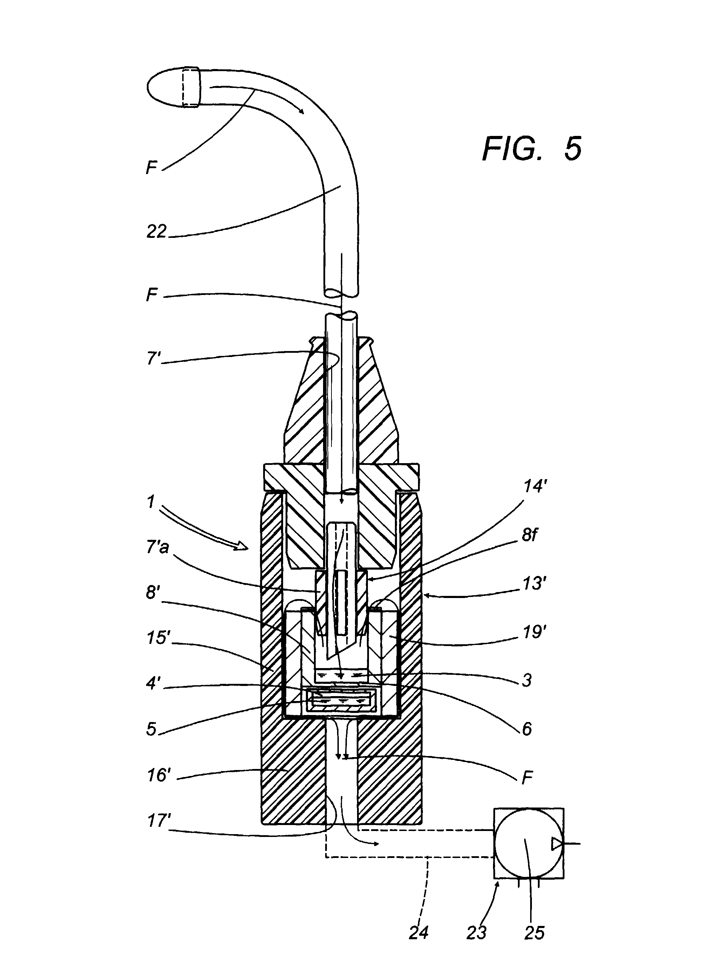

Alternatively, a second embodiment, which confirms the validity of the solution described above is illustrated in Figure 5, in which the container 1 is of the independent type and consists of an outer body 13', which can be hand-held. One end of the body is fitted with a suction cannula 22 which can be applied to the body, whilst the other end is fitted with means 23 for suction of the fluid F.

The internal configuration of the outer body 13' is practically identical to that of the previous embodiment described, that is to say, it houses a central first suction channel 7', one end of which is connected to the suction cannula 22, whilst the other end is connected to both the suction means 23 and a second body 19' which constitutes the first and second chambers 4' and 8', which are separate from one another and sealed.

Again, the first channel 7' has means 14' for connecting the first channel to the second chamber 8'. Similarly to the first embodiment, the first channel consists of a nozzle 7' which can be attached to the cannula 22 and has a tapered end, so as to allow it to penetrate the seal sheet 8f of the upper opening to the second chamber 8', allowing a direct connection between the cannula 22 and the second chamber 8'.

The nozzle 7' has a plurality of radial tabs 7'a (identical to those described in the previous embodiment) to penetrate the second chamber 8' and allow the above-mentioned mixing.

The outer body 13' houses a first cup-shaped portion 15' which houses the second chamber 8', structured in such a way that it can be separated from the body, and a lower tubular element 16', which is the base of the container, for connection to the suction means 23, the lower tubular element having a second channel 17' for the passage of the fluid F and air sucked up which is not used in the mixing operation in the second chamber 8'.

The above-mentioned suction means 23 comprise a tube 24 which connects the second channel 17' to a suction pump 25 which can be calibrated according to the quantity of fluid F to be sucked up, or a preset suction time. The pump 25 is preferably of the manual bellows type.

Upon completion of the suction stage, the cannula 22, the first channel 7', and the second body 19' with the first and second chambers 4 and 8 can be removed from the outer body 13', allowing their examination, analysis and diagnosis using the detector means 5. In this embodiment, the method required in order to control the fluid from a patient is the same as that described for the previous embodiment, the difference being that the body 13' does not have to be applied to the suction tube 9, since the suction and the calibration of the time or the quantity of fluid sucked up is controlled by the pump 25, which is independent on the device described above.

To emphasise the potential of this device, Figures 7, 8 and 9 illustrate other embodiments which improve the application and diagnostic capacities of the device described above.

In the embodiment, the most important variations are in the above-mentioned first suction channel 7, which comprises the cannula 11, which can be attached to the suction end section 10, complete with the tapered end that perforates the second chamber 8, and a disposable pick up tip 201, which can be attached to the free end of the cannula 11 (see also Figures 10 and 11).

The body of the pick up tip 201 is made of a transparent material and has a cross-section substantially tapered towards the free end designed to pick up the fluid F. The tip 201 cross-section is in the shape of a truncated cone, allowing precision pick up of the fluid F in a quantity sufficient for the required examination. The tip 201 is also transparent so that the dental surgeon can check that the quality and quantity of the fluid F sample correspond with the required quality and quantity. This type of control of the quality and quantity of the fluid F picked up is also aided by the presence, at an intermediate point of the cannula 11, of means 202 for picking up the fluid F which act upon the cannula 11, making it possible to "stop" the fluid F picked up in the tip 201 and so examine it before it enters the container element 4, 8; 200.

The means 202 for the controlled pick up of the fluid F consist of a pushbutton 203 attached, in such a way that it can slide radially, to the cannula 11 and having a body 204 with a tube 205 which passes through the body 204 transversally, with two openings, labelled 206 and 207 axially offset from one another. This architecture allows the definition of a position for picking up the fluid F using the free end of the cannula 11 (see Figures 7, 8 and 10 and the arrows F205), in which the body 204 is completely inside the cannula, and a position for examining the fluid F picked up at the free end of the cannula 11 (see Figures 9 and 11 and the arrows F206), in which the body 204 is at least partially outside the cannula 11. In practice, the dental surgeon can press the pushbutton 203 (see arrow F203 in Figure 10) and put the tip 201 in direct contact with the suction tube 9 (that is to say, with the two openings 206 and 207 in the cannula 11) to pick up the fluid F. Said fluid pick up is interrupted, again by the action of the dental surgeon (see arrow F203' in Figure 11) by releasing the pushbutton 203, causing the portion of the body with the opening 206 to exit the cannula 11, and blocking the suction by the tip 201, which is full of fluid F.

The pushbutton 203 is preferably, although without limiting the possibilities for its operation, raised by a spring 203m which is axially fitted to the body 204 and lies between the outside of the cannula 11 and the pushbutton 203.

Thanks to the fact that the tip 201 is transparent, it is possible to visually check the quality and quantity of fluid F. If one of these parameters is sufficient for the analysis, the second chamber 8 can be perforated. If the quantity and/or quality of the fluid F is not acceptable, the dental surgeon must re-establish the suction connection in the cannula 11, pressing the pushbutton 203 so that the fluid F is sucked up by the tube 9, by-passing the mixing chambers (see the configuration of the container 1 in Figure 7), then substituting the tip 201 in order to take a new sample.

If the quality and quantity of the fluid F picked up and located inside the tip 201 is sufficient for the diagnosis, the cannula 11 can be pushed downwards (see arrow F11 in Figure 8) in order to perforate the second chamber 8.

More specifically, the cannula 11 may be guided, in the perforation, fluid depositing and mixing positions with the aid of means 208 for stably positioning the cannula 11 along the longitudinal axis X of the container 1.

Said positioning means 208 act between the cannula 11 and the container 1 and may consist, by way of example and without limiting the scope of application, of a sort of threading 209 inside the end section 10, in which a tooth 210 can engage when pushed and rotated on the cannula 11 (see arrow F210 in Figure 8). When the tooth 210 has reached the first thread, the wall 8f of the second chamber 8 is perforated by the tapered end of the cannula 11, and the pushbutton 203 can then be pushed downwards, allowing suction of the fluid F, which drops into the second chamber 8, and consequent mixing with the means 3.

Upon completion of this operation, the dental surgeon can screw the cannula 11 in further, until the tooth 210 reaches the bottom of the threading 209, so that the tapered end reaches and perforates the separator wall 20, thus arriving at the first chamber 4 and allowing the mixture F + 3 to fall into the first chamber 4. The remaining diagnostic operations are identical to those described above.

Another embodiment is illustrated in Figure 12, where the container element consists of a pad 200 housed in the container 1. The first portion 200a of the pad is soaked in reagent means 3 and/or means for conditioning the biological elements, whilst the second portion 200b of the pad 200 is soaked in the detector means 5. This means that the fluid F can be picked up and dropped directly onto the pad 200 without moving the cannula 11 at all.

The fluid F which falls on the pad 200 is absorbed by the pad and mixes, by capillarity, with the reagent means 3 in the first portion 200a. The mixture F + 3 thus obtained permeates towards the second portion 200b, where it encounters the control means 5 (in Figure 12 the two portions 200a and 200b are separated by a fine line).

At this point the mixture F + 3 + 5 is collected in the end zone 200c of the pad 200, which has a pair of small windows 200d and 200e through which, when the pad 200 is removed from the body 1, the dental surgeon can control whether or not the fluid has been mixed with the means 3 and 5 correctly, and the diagnosis relative to the presence or absence of the infectious agents on the patient.

In all of the embodiments described, all parts inside the container 1, as well as the tip 201, are preferably disposable parts.

A device structured in this way and the relative detection method fulfil the stated aims with a simple construction and rapid, safe execution, without forcing the patient to give special blood samples unrelated to the actual treatment carried out. The special structure of the device allows it to be integrated on the dental unit or to be integrated, according to the preference of the dental surgeon who requires this type of diagnosis, without any variation in the structure of the dental unit, by easily mounting it on the dental unit suction unit, or using an "external" solution which is easily manoeuvred independently of the dental unit. The times for diagnosis of the reaction are extremely short and may be directly checked by the dental surgeon treating the patient.

The invention described can be subject to modifications and variations without thereby departing from the scope of the inventive concept. Moreover, all the details of the invention may be substituted by technically equivalent elements.

## Claims

1. A method for detecting infectious elements, antibodies or other biological indicators in a patient, in particular within a dental surgery, characterised in that the method envisages the following operations:
a) the suction of fluid (F) from the patient through suction means (2);
b) mixing of the fluid (F) picked up with reagent means (3) and/or means for conditioning the biological elements; and
c) depositing of the mixture (F, 3) thus obtained;
d) analysis and control of the reaction which takes place in the mixture (F, 3), using detector means (5).

2. The method according to claim 1, characterised in that at least the suction, mixing and depositing stages are carried out in a single stage and within a single element (1).

3. The method according to claim 1, characterised in that the suction stage is carried out directly within the oral cavity of the patient.

4. The method according to claim 1, characterised in that the suction operation is carried out in accordance with a preset time.

5. The method according to claim 1, characterised in that the suction operation is carried out through a control of the volume of air or fluid picked up, which can be preset.

6. The method according to claim 1, characterised in that the suction operation is followed by an operation for controlling the quality and/or quantity of the fluid picked up prior to the mixing operation.

7. The method according to claim 1, characterised in that the mixing operation is carried out when the fluid (F) picked up makes contact with a surface (6) equipped with or soaked in reagent and/or conditioning means (3).

8. The method according to claim 1, characterised in that the second, analysis and control stage is preceded by a stage for depositing said mixture (F, 3) on support and detector means (4, 5).

9. A dental unit, characterised in that it comprises, connected to the unit or as an integral part of the unit, detector means (1) designed to effect at least the following operations:
a) the suction of fluid (F) from the patient through suction means (2);
b) mixing of the fluid (F) picked up with reagent means (3) and/or means for conditioning the biological elements; and
c) depositing of the mixture (F, 3) thus obtained in a special container element (4, 8, 200), envisaged inside the detector means (1).

10. A device for detecting infectious elements, antibodies or other biological indicators on patients treated in a dental surgery, characterised in that it comprises a container (1) with a first channel (7) for the suction of a quantity of fluid (F) from the patient, said channel (7) leading into at least one container element (8, 4; 200), the first portion of the latter being equipped with or soaked in reagent means (3) and/or means for conditioning the biological elements, and being designed to make contact with or be mixed with the fluid (F), and, the second portion of the container element (8, 4; 200) being equipped with detector means (5) designed to allow a diagnosis of the mixture (F, 3) defined in the first portion.

11. The device according to claim 10, characterised in that the container element comprises a second chamber (8), defining the first portion into which the first suction channel (7) gives, having said reagent and/or conditioning means (3), and a first chamber (4), defining the second portion which is attached to or can be connected to the second chamber (8), for containing the mixture (F, 3) thus obtained; said first chamber (4) for the mixture (F, 3) being equipped with the detector means (5).

12. The device according to claims 10 and 11, characterised in that the first chamber (4) is of the type which can be removed from the container (1), allowing the control of the mixture (F, 3) using the detector means (5) and the relative diagnosis to be made outside the container (1).

13. The device according to claim 11, characterised in that the first, depositing chamber (4) defines detector and support means (5), the latter being designed to make contact with the mixture (F, 3) which drops from the second chamber (8) and to allow a diagnosis, using the detector means (5), by observing the inside of the container (1).

14. The device according to claim 10, characterised in that the container (1) is of the disposable type.

15. The device according to claims 9 and 10, where the dental surgery is equipped with a dental unit, being fitted, amongst other things, with at least a suction - discharge tube (9) for pollutant biological elements, extending from an external operating end, with an end section (10) which can house a suction cannula (11), one end of the latter giving onto a discharge tank (12) in the dental unit, the device being characterised in that the container (1) for picking up the fluid (F) can be applied, in such a way that it is removable, on the suction tube (9), and may be inserted between the cannula (11) and the discharge tank (12).

16. The device according to claim 15, characterised in that the container (1) fully defines said end section (10) of the suction - discharge tube (9), to which the cannula (11) is attached as a single element.

17. The device according to claims 10 to 16, characterised in that the container (1) consists of a tubular connecting body (13) with open ends which can be connected to the end section (10) for suction and can house the first suction channel (7), passing through and connectable to the end section (10), and positioned coaxially to the suction tube (9), thus allowing the passage of the fluid (F) sucked up; the first channel (7) being fitted with means (14) for stably connecting the first channel to the second chamber (8), allowing the fluid (F) to flow into the second chamber (8).

18. The device according to claim 17, characterised in that the first channel consists of a nozzle (7) which can be connected to the end section (10), having one tapered end, allowing it to penetrate a sheet (8f) sealing the upper opening of the second chamber (8), thus allowing a connection between the end section (10) and the chamber (8).

19. The device according to claim 18, characterised in that the nozzle (7) has a plurality of radial tabs (7a) connected to the outer surface of the nozzle, defining the connecting means (14) and designed to partially penetrate the second chamber (8).

20. The device according to claims 10 to 19, characterised in that the body (13) has a first cup-shaped portion (15) housing the second chamber (8) which can be separated from the body, and a lower tubular element (16) for connection to the suction tube (9), and having a second channel (17) for the passage of the fluid (F) sucked up.

21. The device according to claim 20, characterised in that the body (13) has valve means (18) positioned and acting on the second suction channel (17), being designed to allow the second channel to be closed when a preset quantity of fluid has been sucked up and/or when a preset fluid (F) suction time has elapsed.

22. The device according to claims 10 to 20, characterised in that the second chamber (8) consists of a second cylindrical body (19), having an upper wall which is sealed by a sheet (8f), and a lower wall (20) defining a separator surface for the first chamber (4) for depositing the mixture (F, 3) obtained in the second chamber (8), being located in a relative seat (21) in the second cylindrical body (19); it being possible for the nozzle (7) to perforate the separator surface (20), following definition of the mixture (F, 3) in the second chamber (8), allowing the mixture to be deposited in the first chamber (4) and the relative analysis and control using the detector means (5).

23. The device according to claim 10, characterised in that the container (1) consists of an outer body (13') which can be hand-held, one end of the body being fitted with a suction cannula (22) which can be applied to the body, whilst the other end is fitted with means (23) for suction of the fluid (F).

24. The device according to claims 10 and 23, characterised in that the outer body (13') houses a central first suction channel (7'), one end being connected to the suction cannula (22), whilst the other end is connected to both the suction means (23) and a second body (19'), the latter constituting the first (4') and second (8') chambers, which are separate from one another and sealed; the first suction channel (7') having means (14') for connection of the first channel to the second chamber (8').

25. The device according to claim 24, characterised in that the first channel consists of a nozzle (7') which can be connected to the cannula (22), one end of the nozzle being tapered in such a way that it can penetrate a sheet (8f) sealing the upper opening of the second chamber (8'), thus allowing a connection between the cannula (22) and the second chamber (8').

26. The device according to claim 25, characterised in that the nozzle (7') has a plurality of radial tabs (7a) connected to the outer surface of the nozzle, defining the connecting means (14') and designed to partially penetrate the second chamber (8').

27. The device according to claims 9 and 24, characterised in that the outer body (13') houses a first cup-shaped portion (15') housing the second chamber (8') which can be separated from the body, and a lower tubular element (16') for connection to the suction means (23), and having a second channel (17') for the passage of the fluid (F) sucked up.

28. The device according to claim 27, characterised in that the suction means (23) consist of a tube (24) connecting the second channel (17') to a suction pump (25) which can be calibrated according to the quantity of fluid (F) to be sucked up, or a preset suction time.

29. The device according to claim 24, characterised in that the cannula (22) and first channel (7'), together with the second body (19') which constitutes the first and second chambers (4', 8') can be removed from the outer body (13'), allowing examination of the mixture (F, 3) and the relative analysis and diagnostics using the detector means (5).

30. The device according to claim 10, characterised in that the container element (200) consists of a pad housed in the container (1), the first portion (200a) of the pad being soaked in the reagent and/or conditioning means (3) for the biological elements; the second portion (200b) of the pad (200) being equipped with or soaked in detector means (5) positioned on a support (200c).

31. The device according to claim 10, characterised in that the first suction channel (7) comprises a cannula (11) which can be housed in a suction end section (10), one end of the tube being tapered for perforation, and a disposable pick up tip (201) which can be attached to the free end of the cannula (11); the pick up tip (201) having a transparent body and a cross-section which is substantially tapered towards the free end designed to pick up the fluid (F).

32. The device according to claims 10 and 15, characterised in that the cannula (11) has, at an intermediate point, means (202) for the controlled pick up of the fluid (F), acting on the cannula (11) in such a way as to allow examination of the fluid (F) picked up before said fluid (F) enters the container element (4, 8; 200).

33. The device according to claim 32, characterised in that the means (202) for the controlled pick up of the fluid (F) consist of a pushbutton (203) attached to the cannula (11) in such a way that it can slide radially, the pushbutton having a body (204) with a tube (205) passing through said body, with two axially offset openings (206, 207), allowing a position for the pick up of the fluid (F) from the free end of the cannula (11), in which the body (204) is completely inside the cannula, and a position for examination of the fluid (F) picked up, at the free end of the cannula (11), in which the body (204) is at least partially outside the cannula (11).

34. The device according to claims 10 and 15, characterised in that the cannula (11) comprises means (208) for its stable positioning in several operating positions, for depositing and mixing the fluid, along the longitudinal axis (X) of the container (1) and acting between the cannula and the container (1).
